# EUROPEAN PATENT APPLICATION

(11) **EP 4 394 553 A1**
(43) Date of publication of application: **03.07.2024**
(21) Application number: 22887307.1
(22) Date of filing: 11.08.2022
(51) Int. Cl.: G06F 1/3234, G06F 1/3218, G06F 1/16, G06F 9/4401, G06F 11/30

(54) **ELECTRONIC DEVICE INCLUDING FLEXIBLE DISPLAY, AND CONTROL METHOD THEREOF**

(30) Priority: 25.10.2021 KR 20210142783
(71) Applicant: Samsung Electronics Co., Ltd., Suwon-si, Gyeonggi-do 16677 (KR)
(72) Inventor: KWAK, Myunghoon, Suwon-si, Gyeonggi-do 16677 (KR); LEE, Jookwan, Suwon-si, Gyeonggi-do 16677 (KR); KIM, Yangwook, Suwon-si, Gyeonggi-do 16677 (KR); PARK, Jihea, Suwon-si, Gyeonggi-do 16677 (KR)
(74) Representative: Appleyard Lees IP LLP
(86) International application number: PCT/KR2022/011968
(87) International publication number: WO 2023/075101

(57) **Abstract**

An electronic device according to an embodiment may comprise: a display module including a flexible display; a driving unit for changing a size of a display screen where the flexible display is exposed to the outside of the electronic device; and a power management module for supplying power to the electronic device. The electronic device may determine whether a condition for restricted booting for controlling the driving unit is satisfied in case that power is applied to the electronic device, operate in a restricted booting state in which an operation system is not booted in case that the condition for restricted booting is satisfied, and adjust the size of the display screen of the flexible display by controlling the driving unit through the power management module in the restricted booting state. Various other embodiments may also be possible.

## Description

### Technical Field

The following disclosure relates to an electronic device with a flexible display and a control method thereof and, specifically, to an electronic device for controlling a state of a flexible display even without complete booting of an operating system (OS) and a control method thereof.

### Background Art

With the development of display technology, a variety of expandable displays are emerging. For example, such expandable displays may be implemented through flexible displays. Flexible displays use plastic films instead of glass and thus, have flexibility. Flexible displays have the advantages of being thin, lightweight, strong against impact, curved or bent, and manufactured in various shapes. Such flexible displays may be used even in the industrial field where it is restricted or impossible to apply glass substrate-based displays.

### Disclosure of the Invention

### Technical Solutions

In a terminal with a display expanded and reduced through a component such as a motor that transmits electrical driving force, an operating system (OS) may not be booted normally due to various causes. For example, if the power is off due to low temperature and/or low voltage, the power may be off again despite attempts to operate the motor after booting the OS. In addition, software errors may disallow access to the OS, or errors in the OS may cause the electronic device to be reset repeatedly.

If a terminal can control the expansion and reduction of the display only when the OS is fully booted, a user may not expand or reduce the display unless the terminal accesses the OS normally.

According to an embodiment, an electronic device may include a display module including a flexible display, a driving unit configured to change a size of a display screen where the flexible display is exposed to the outside of the electronic device, a power management module configured to supply power to the electronic device, a memory configured to store computer-executable instructions, and at least one processor configured to access the memory and execute the instructions. The at least one processor may determine whether a condition for limited booting to control the driving unit is satisfied, when power is applied to the electronic device. The at least one processor may operate in a limited booting state in which an OS is not booted, when the condition for limited booting is satisfied. The at least one processor may be configured to adjust the size of the display screen of the flexible display by controlling the driving unit through the power management module, in the limited booting state.

According to an embodiment, in an operation method of an electronic device, the electronic device may include a display module including a flexible display, a driving unit configured to change a size of a display screen where the flexible display is exposed to the outside of the electronic device, and a power management module configured to supply power to the electronic device. The operation method may include, when power is applied to the electronic device, determining whether a condition for limited booting to control the driving unit is satisfied, operating in a limited booting state in which an operating system is not booted, when the condition for limited booting is satisfied, and adjusting the size of the display screen of the flexible display by controlling the driving unit through the power management module, in the limited booting state.

### Effects

According to various embodiments, an electronic device for controlling the expansion and reduction of a flexible display at low power without booting an OS is provided.

According to various embodiments, an electronic device for displaying additional information as a flexible display is expanded, is provided.

In addition, various effects directly or indirectly ascertained through the present disclosure may be provided.

### Brief Description of Drawings

FIG. 1 is a block diagram of an electronic device in a network environment according to various embodiments.
FIG. 2 is a block diagram of a power management module and a battery according to various embodiments.
FIGS. 3A and 3B are front perspective views illustrating a reduced state and an expanded state of an electronic device with a flexible display according to various embodiments.
FIGS. 4A and 4B are rear perspective views illustrating a reduced state and an expanded state of an electronic device with a flexible display according to various embodiments.
FIG. 5 is a block diagram illustrating a configuration of an electronic device according to various embodiments.
FIGS. 6 and 7 are diagrams illustrating a limited booting condition for adjusting a flexible display according to various embodiments.
FIG. 8 is a diagram illustrating an operation of adjusting a flexible display according to various embodiments.
FIG. 9 is a diagram illustrating an example of displaying different screens according to the adjustment of a flexible display according to various embodiments.
FIG. 10 is a flowchart illustrating an operation method of an electronic device according to various embodiments.

### Best Mode for Carrying Out the Invention

Hereinafter, embodiments will be described in detail with reference to the accompanying drawings. When describing the embodiments with reference to the accompanying drawings, like reference numerals refer to like components, and any repeated description related thereto will be omitted.

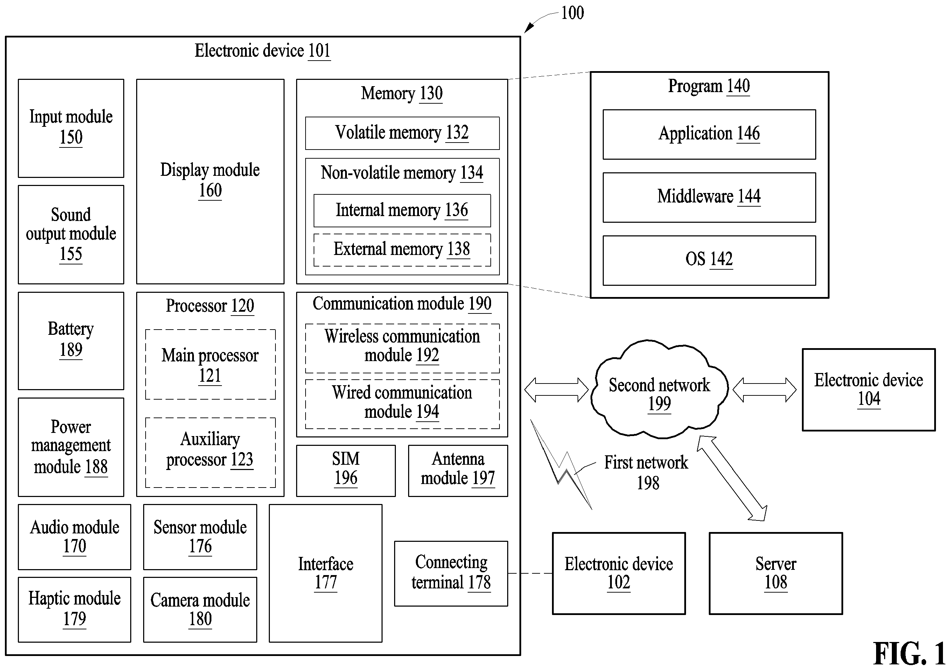

FIG. 1 is a block diagram of an electronic device in a network environment according to various embodiments.

FIG. 1 is a block diagram of an electronic device 101 in a network environment 100 according to various embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed, or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing a record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., an electronic device 102 such as a speaker or a headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, a Hall sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and lowlatency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed at the electronic device 101 may be executed at one or more of the external electronic devices (e.g., the external devices 102 and 104, and the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra lowlatency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

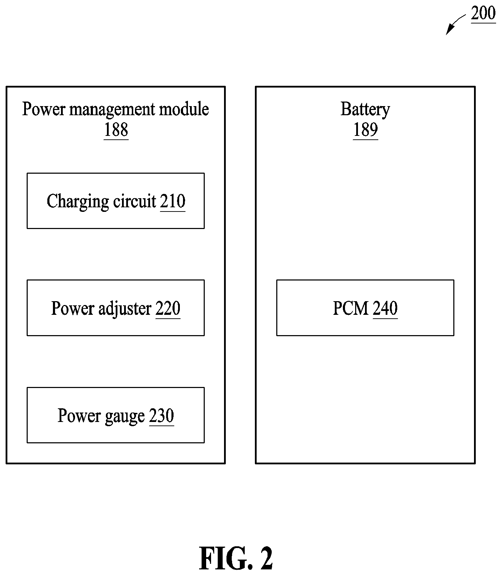

FIG. 2 is a block diagram 200 of the power management module 188 and the battery 189 according to various embodiments.

Referring to FIG. 2, the power management module 188 may include a charging circuit 210, a power adjuster 220, or a power gauge 230. The charging circuit 210 may charge the battery 189 using power supplied from an external power source outside the electronic device 101. According to an embodiment, the charging circuit 210 may select a charging scheme (e.g., normal charging or quick charging) based at least in part on a type of the external power source (e.g., a power outlet, a USB, or wireless charging), a magnitude of power suppliable from the external power source (e.g., about 20 Watts or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low-dropout (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuit 210, the power adjuster 220, or the power gauge 230, charging state information (e.g., lifetime, over voltage, low voltage, over current, over charge, over discharge, overheat, short, or swelling) related to charging the battery 189 based at least in part on the measured use state information about the battery 189. The power management module 188 may determine whether the state of the battery 189 is normal or abnormal based at least in part on the determined charging state information. If the state of the battery 189 is determined to be abnormal, the power management module 188 may adjust charging the battery 189 (e.g., reduce the charging current or voltage, or stop the charging). According to an embodiment, at least some of the functions of the power management module 188 may be performed by an external control device (e.g., the processor 120).

According to an embodiment, the battery 189 may include a protection circuit module (PCM) 240. The PCM 240 may perform one or more of various functions (e.g., a pre-cutoff function) to prevent performance deterioration of, or damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188. According to an embodiment, the corresponding sensor (e.g., the temperature sensor) of the sensor module 176 may be included as part of the PCM 240, or may be disposed near the battery 189 as a separate device.

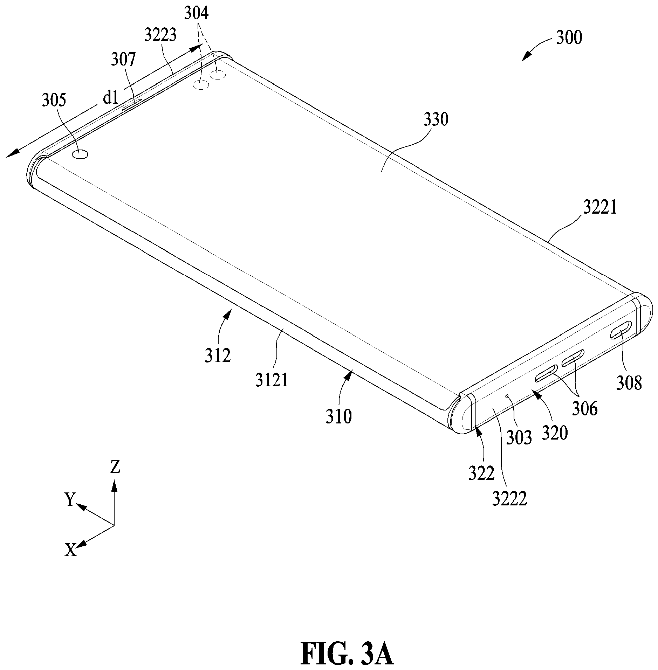

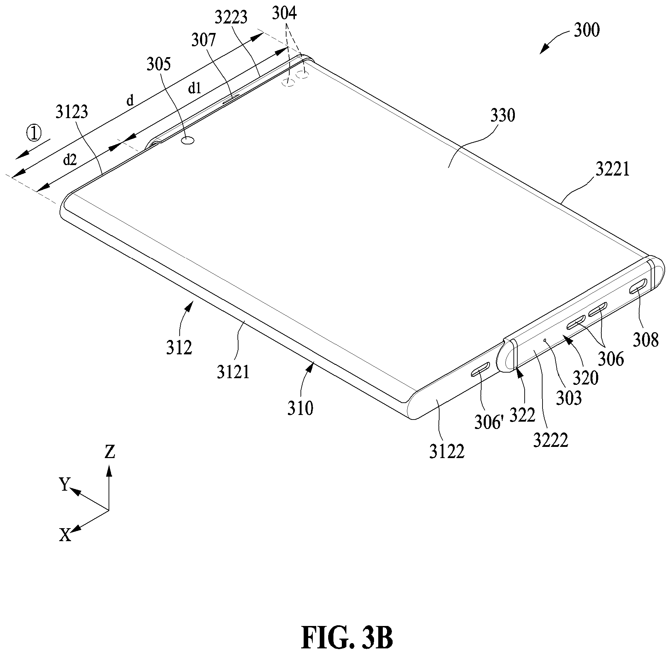

FIGS. 3A and 3B are front perspective views illustrating a reduced state and an expanded state of an electronic device with a flexible display according to various embodiments.

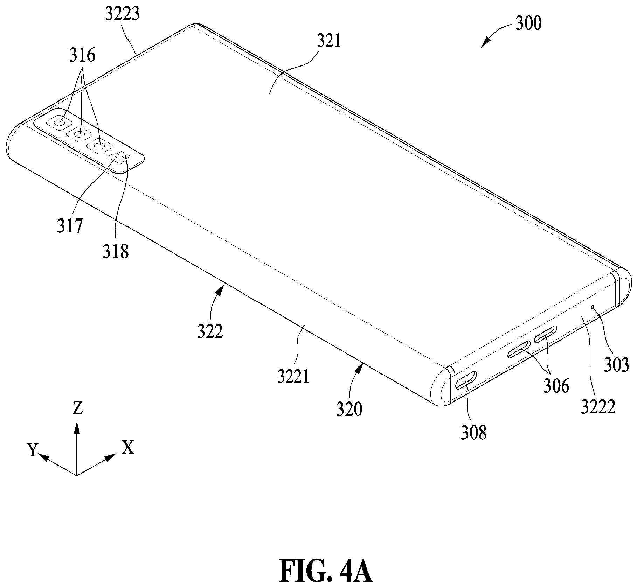

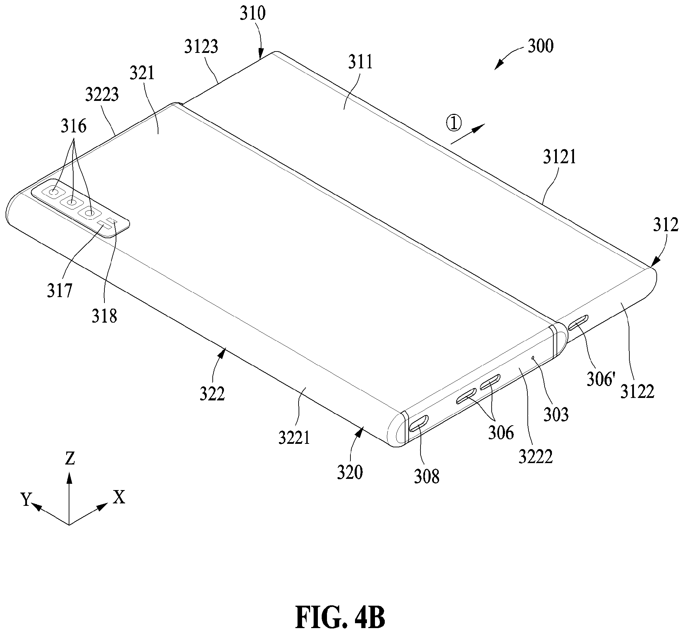

FIGS. 4A and 4B are rear perspective views illustrating the reduced state and the expanded state of the electronic device with the flexible display according to various embodiments.

An electronic device 300 of FIG. 3A may be at least partially similar to the electronic device 101 of FIG. 1, or may further include other components of the electronic device.

Referring to FIGS. 3A to 4B, the electronic device 300 may include a first housing 310, and a second housing 320 that is at least partially movably coupled to the first housing 310. According to an embodiment, the first housing 310 may include a first plate 311, and a first side frame 312 that extends in a substantially vertical direction (e.g., a z-axis direction) along an edge of the first plate 311. According to an embodiment, the first side frame 312 may include a first side surface 3121, a second side surface 3122 extending from one end of the first side surface 3121, and a third side surface 3123 extending from the other end of the first side surface 3121. According to an embodiment, the first housing 310 may include a first space that is at least partially closed from the outside through the first plate 311 and the first side frame 312.

According to various embodiments, the second housing 320 may include a second plate 321, and a second side frame 322 that extends in a substantially vertical direction (e.g., the z-axis direction) along an edge of the second plate 321. According to an embodiment, the second side frame 322 may include a fourth side surface 3221 facing away from the first side surface 3121, a fifth side surface 3222 extending from one end of the fourth side surface 3221 and at least partially coupled to the second side surface 3122, and a sixth side surface 3223 extending from the other end of the fourth side surface 3221 and at least partially coupled to the third side surface 3123. As another embodiment, the fourth side surface 3221 may extend from a structure other than the second plate 321 and may also be coupled to the second plate 321. According to an embodiment, the second housing 320 may include a second space that is at least partially closed from the outside through the second plate 321 and the second side frame 322. According to an embodiment, the first plate 311 and the second plate 321 may be disposed to at least partially form a rear surface of the electronic device 300. For example, the first plate 311, the second plate 321, the first side frame 312, and the second side frame 322 may be formed of, for example, a polymer, coated or colored glass, ceramic, metal (e.g., aluminum, stainless steel (STS), or magnesium), or a combination of two or more of the above materials.

According to various embodiments, the electronic device 300 may include a flexible display 330 disposed to be supported by the first housing 310 and the second housing 320. According to an embodiment, the flexible display 330 may include a flat portion supported by the second housing 320, and a bendable portion extending from the flat portion and supported by the first housing 310. According to an embodiment, the bendable portion of the flexible display 330 may be disposed in the first space of the first housing 310 not to be exposed to the outside when the electronic device 300 is reduced, and may be exposed to the outside to extend from the flat portion while being supported by the first housing 310 when the electronic device 300 is expanded. Accordingly, the electronic device 300 may be a rollable electronic device in which a display screen of the flexible display 330 is expanded in response to an expansion operation according to a movement of the first housing 310 from the second housing 320.

According to various embodiments, in the electronic device 300, the first housing 310 may be at least partially inserted into the second space of the second housing 320, and may be coupled to be movable in direction (1). For example, in the reduced state, the electronic device 300 may be maintained in a state in which the first housing 310 and the second housing 320 are coupled such that a distance between the first side surface 3121 and the fourth side surface 3221 is a first distance d1. According to an embodiment, in the expanded state, the electronic device 300 may be maintained in a state in which the first housing 310 is protruding from the second housing 320 to have a second interval distance d in which the first side surface 3121 is protruding from the fourth side surface 3221 by a predetermined distance d2. According to an embodiment, the flexible display 330 may be supported by the first housing 310 and/or the second housing 320 such that both ends thereof have curved edges, in the expanded state.

According to various embodiments, the electronic device 300 may automatically transition between the expanded state and the reduced state by a driving unit disposed in the first space and/or the second space. For example, a processor (e.g., the processor 120 of FIG. 1) of the electronic device 300 may be configured to control an operation of the first housing 310 using the driving unit when an event for a transition between the open state and the closed state of the electronic device 300 is detected. As another example, the first housing 310 may manually protrude from the second housing 320 through a user's manipulation. In this case, the first housing 310 may protrude by a protrusion amount desired by the user, and thus, a screen of the flexible display 330 may vary to have various display areas. Accordingly, the processor (e.g., the processor 120 of FIG. 1) of the electronic device 300 may display an object in various ways corresponding to a display area corresponding to a predetermined protrusion amount of the first housing 310, and may control to execute an application program.

According to various embodiments, the electronic device 300 may include at least one of an input device 303, sound output devices 306 and 307, sensor modules 304 and 317, camera modules 305 and 316, a connector port 308, a key input device (not shown), or an indicator (not shown). As another embodiment, at least one of the above-described components of the electronic device 300 may be omitted, or the electronic device 300 may further include other components.

According to various embodiments, the input device 303 may include a microphone 303. In some embodiments, the input device 303 may include a plurality of microphones 303 arranged to sense a direction of sound. The sound output devices 306 and 307 may include speakers 306 and 307. The speakers 306 and 307 may include an external speaker 306 and a phone call receiver 307. As another embodiment, when an external speaker 306' is disposed in the first housing 310, sound may be output through a speaker hole 306 formed in the second housing 320 in the reduced state. According to an embodiment, the microphone 303 or the connector port 308 may also be formed to have substantially the same configuration. As another embodiment, the sound output devices 306 and 307 may include a speaker (e.g., a piezo speaker) that operates without a separate speaker hole 306.

According to various embodiments, the sensor modules 304 and 317 may generate an electrical signal or a data value corresponding to an internal operational state of the electronic device 300 or an external environmental state. The sensor modules 304 and 317 may include, for example, a first sensor module 304 (e.g., a proximity sensor or an illuminance sensor) disposed on a front surface of the second housing 320, and/or a second sensor module 317 (e.g., a heart rate monitoring (HRM) sensor) disposed on a rear surface of the second housing 320. According to an embodiment, the first sensor module 304 may be disposed below the flexible display 330 in the second housing 320. According to an embodiment, the first sensor module 304 may further include at least one of a proximity sensor, the illuminance sensor 304, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera devices 305 and 316 may include a first camera device 305 disposed on the front surface of the second housing 320 of the electronic device 300, and a second camera device 316 disposed on the rear surface of the second housing 320. According to an embodiment, the electronic device 300 may include a flash 318 located near the second camera device 316. According to an embodiment, the camera devices 305 and 316 may include one or more lenses, an image sensor, and/or an ISP. According to an embodiment, the first camera device 305 may be disposed under the flexible display 330, and may be configured to capture an object through a portion of an active area of the flexible display 330. According to an embodiment, the flash 318 may include, for example, a light-emitting diode (LED) or a xenon lamp. In some embodiments, two or more lenses (e.g., a wide-angle lens and a telephoto lens) and image sensors may be disposed on one surface of the electronic device 300.

According to various embodiments, the electronic device 300 may include at least one antenna (not shown). According to an embodiment, the at least one antenna may wirelessly communicate with an external electronic device (e.g., the electronic device 104 of FIG. 1), or may wirelessly transmit and receive power required for charging. According to an embodiment, the antenna may include a legacy antenna, a mmWave antenna, a near field communication (NFC) antenna, a wireless charging antenna, and/or a magnetic secure transmission (MST) antenna. As another embodiment, an antenna structure may be formed through at least a portion of the first side frame 312 and/or the second side frame 322, which are formed of metal.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one or two of A, B, or C," may include any one of, or all possible combinations of the items enumerated together in a corresponding one of the phrases. As used herein, such terms such as "1^{st}," and "2^{nd}," or "first" and "second" may be used to simply distinguish a corresponding component from another, and do not limit the components in other aspect (e.g., importance or order). It is to be understood that if a component (e.g., a first component) is referred to, with or without the term "operatively" or "communicatively", as "coupled with," "coupled to," "connected with," or "connected to" another component (e.g., a second component), it means that the component may be coupled with the other component directly (e.g., wiredly), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least portion of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

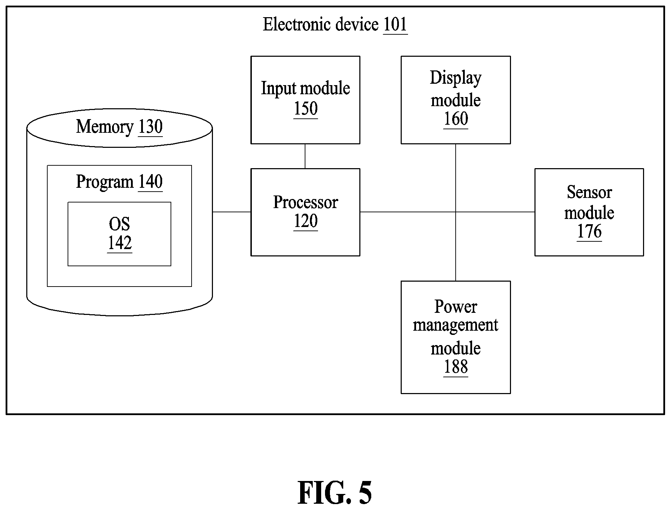

FIG. 5 is a block diagram illustrating a configuration of the electronic device 101 according to various embodiments.

According to an embodiment, the electronic device 101 may include the display module 160 including a flexible display, the power management module 188 for supplying power to the electronic device 101, the input module 150 for receiving a user input, and the sensor module 176 for detecting an expanded or reduced state of the flexible display.

As described with reference to FIGS. 3A to 4B, a portion of the flexible display of the electronic device 101 may be inserted into and/or exposed to a housing (e.g., the first housing 310 of FIG. 3A) based on a movement of the housing, whereby a display screen of the flexible display may be expanded and/or reduced, and the electronic device 101 may include a driving unit for controlling the expansion and/or reduction of the housing. Instructions configured to control the driving unit may be stored in the memory 130. The expansion and reduction of the housing may be controlled using various methods. For example, the housing may be expanded or reduced by a mechanical component such as a motor, and in this case, the motor may operate as the driving unit. The motor may include a servomotor or a stepper motor, but is not limited thereto. As another example, the housing may be expanded or reduced by means of a shape-memory alloy, and in this case, a module for supplying electricity to the shape-memory alloy may operate as the driving unit. However, the method of controlling the expansion and/or reduction of the housing is not limited to the example described above, and the expansion or reduction of the housing may be controlled by the driving unit based on an electrical signal using various methods.

According to an embodiment, the electronic device 101 including the flexible display may be implemented like the electronic device 300 described with reference to FIGS. 3Ato 4B. However, embodiments are not limited thereto, and the flexible display (or an expandable display) of the electronic device 101 may be implemented in various forms.

For example, the flexible display may be any one of a foldable display, a rollable display, and a slidable display. Hereinafter, for ease of description, the term "extension of a display" refers to the display's operation of increasing the size of a display screen exposed to the outside of the electronic device. For example, a display screen of a rollable display may expand as a rolled portion is unrolled, and a display screen of a foldable display may expand as a folded portion is unfolded. A display screen of a slidable display may be expanded as a rolled portion is unrolled or a hidden portion is exposed. An additional display screen may be activated in response to such expansion of the display, and the electronic device may display objects on an expanded screen including the existing display screen and the additional display screen.

As the display is expanded, while only the existing display screen is exposed in the electronic device in the reduced state, the additional display screen may be further exposed in the electronic device in the expanded state. To provide a natural user experience, the additional display screen and the existing display screen may be connected without distinction and operate as a single display screen. For example, as the size of the display screen changes, the size and/or margin of at least one object to be displayed may be adjusted based on the detected size of the display screen, such that the at least one object may be displayed on a single screen.

According to an embodiment, the power management module 188, the input module 150, and the sensor module 176 may correspond to the power management module 188, the input module 150, and the sensor module 176 described with reference to FIGS. 1 and 2.

According to an embodiment, the electronic device 101 may include the memory 130 in which computer-executable instructions are stored and the processor 120 for accessing the memory 130 and executing the instructions. When the instructions stored in the memory are executed, the processor 120 may determine whether a condition for limited booting to control a driving unit (not shown) is satisfied when power is applied to the electronic device 101, limitedly boot the electronic device 101 through the power management module 188 when the condition for limited booting is satisfied, control the driving unit (not shown) through the power management module 188 as the electronic device 101 is limitedly booted, and thereby adjust the size of the display screen of the flexible display. As described above with reference to FIGS. 3A to 4B, the driving unit (not shown) may increase or reduce the size of the display screen where the flexible display is exposed to the outside of the electronic device 101.

According to an embodiment, the processor 120 may perform a booting-related operation of the electronic device 101 when power is applied to the electronic device 101. Hereinafter, an example of booting the electronic device 101 after power (e.g., a power-on user input through the input module 150, or an external power supply) is applied to the electronic device 101 is described in brief.

According to an embodiment, as described with reference to FIG. 1, the memory 130 of the electronic device 101 may include the volatile memory 132 that requires power to maintain information and non-volatile memory 134 that may maintain the stored information even if power is not supplied. For example, random-access memory (RAM), which is the main memory, may be included in the volatile memory 132, and read-only memory (ROM) and flash memory may be included in the non-volatile memory 134. A basic input/output system (BIOS), which is a program that first handles control of the electronic device 101 and processes the most basic functions for booting the electronic device 101 when power is applied to the electronic device 101, may be stored in the non-volatile memory 134.

The processor 120 may be connected to the main memory and the non-volatile memory 134 through a bus system including an address bus, a control bus, and/or a data bus, and when power is applied to the electronic device 101, the processor 120 may load the BIOS stored in the ROM from the non-volatile memory 134 into the main memory (e.g., the volatile memory 132). The BIOS may perform an operation of initializing the electronic device 101 and load a boot program (or a boot loader) into the main memory. When a kernel of the OS 142 is loaded into the main memory by a boot program, the OS 142 may be booted in the electronic device 101. For example, when the boot loader is loaded into the main memory, the processor 120 may execute at least part of the loaded boot loader, and thus, the OS 142 may be booted in the electronic device 101. If the condition for limited booting according to the various embodiments described in this disclosure is satisfied, limited booting may be performed without booting the OS 142 in the manner described above.

According to an embodiment, the processor 120 may be implemented to be integrated with the memory 130. For example, the processor 120 may be implemented in the form of a chip in the electronic device 101, and the memory 130 may be implemented on the same chip as the processor 120 or on a chip adjacent thereto.

According to an embodiment, the sensor module 176 may include a Hall sensor (not shown). The Hall sensor may be a transducer for generating an electrical signal (e.g., a voltage) in response to a magnetic field. The Hall sensor may generate an electrical signal of a relatively high intensity when the magnetic field is strong, and generate an electrical signal of a relatively low intensity when the magnetic field is weak. The processor 120 may receive an electrical signal according to the detection of the magnetic field from the Hall sensor.

According to an embodiment, the sensor module 176 may include an electronic compass (E-compass) or fluxgate compass capable of detecting the angle of the electronic device 101, for example, the angle at which the flexible display is folded, using a geomagnetic sensor, an acceleration sensor, and a Hall sensor. For example, the geomagnetic sensor may measure azimuth using the magnetic field and a line of magnetic force, and the Hall sensor may measure the angle at which the flexible display is folded by detecting the strength of the magnetic field.

According to an embodiment, the processor 120 may measure the yaw, pitch, and roll values of the electronic device 101 through motion data obtained from the sensor module 176. According to an embodiment, the motion data may include 3-axis motion data (x1, y1, z1) obtained from the acceleration sensor or 9-axis motion data obtained by additionally using a gyroscope sensor and the geomagnetic sensor. According to an embodiment, the processor 120 may form a visual coordinate space based on the yaw, pitch, and/or roll values measured from the 9-axis motion data.

According to an embodiment, as described above as to the expandable display implemented through a flexible display, the flexible display of the electronic device 101 may be expanded and reduced in various forms, and the sensor module 176 may also detect information about the expansion and reduction of the flexible display using various methods.

According to an embodiment, the sensor module 176 may operate independently of the OS 142, and even if the OS 142 is not loaded into the memory 130, the processor 120 may determine the expanded or reduced state of the flexible display based on the information obtained through the sensor module 176. For example, the processor 120 may include a sensor hub processor (e.g., the auxiliary processor 123 of FIG. 1), and the sensor hub processor may receive data from the sensor module 176 and process the data even when the main processor (e.g., the main processor 121 of FIG. 1) included in the processor 120 is in an inactive state (e.g., a sleep state).

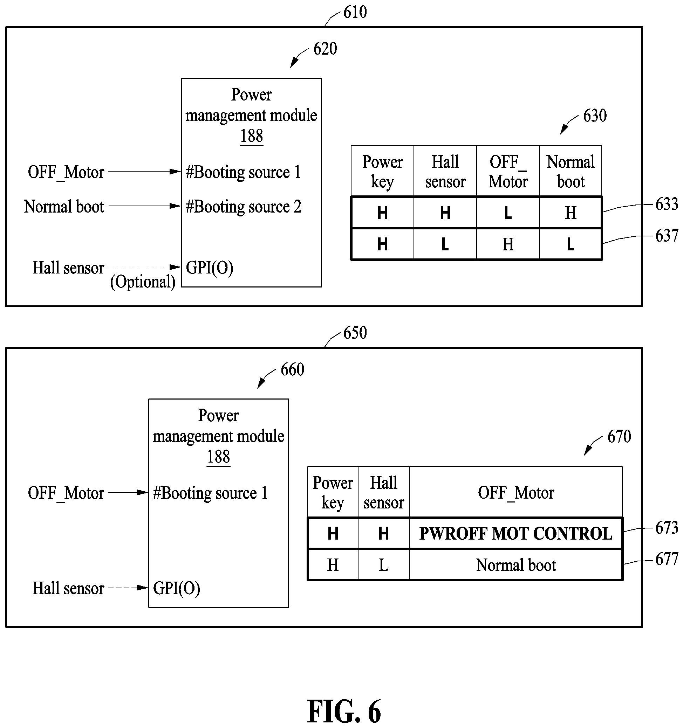

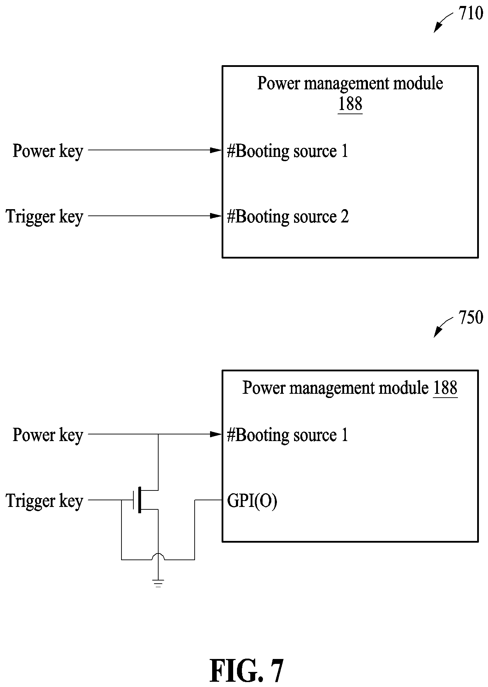

According to an embodiment, the processor 120 may determine whether the condition for limited booting to control the driving unit for adjusting the size of the display screen of the flexible display is satisfied, based on the user input received through the input module 150 and information about the expanded or reduced state of the flexible display detected through the sensor module 176. Various embodiments of the condition for limited booting are described in detail with reference to FIGS. 6 and 7.

According to an embodiment, the processor 120 may limitedly boot the electronic device 101 when the condition for limited booting to adjust the flexible display is satisfied, and adjust the size of the display screen of the flexible display through the power management module 188 as the electronic device 101 is limitedly booted. Hereinafter, the processor 120's adjusting the flexible display may be adjusting the size of the display screen of the flexible display.

According to an embodiment, the processor 120 may limitedly boot the electronic device 101 by not loading the entirety or at least part of the OS 142 into the memory 130 during the booting process described above. According to an embodiment, the processor 120 may determine whether the condition for limited booting to adjust the flexible display is satisfied. When the condition for limited booting is satisfied, the processor 120 may limitedly boot electronic device 101 by loading instructions configured to control the driving unit for adjusting the size of the display screen of the flexible display into the memory 130, rather than loading the entirety or at least part of the OS 142 in the electronic device 101 into the memory 130. In other words, the processor 120 may operate in a limited booting state in which the OS 142 is not booted, when the condition for limited booting is satisfied. The limited booting state may include a state in which the processor 120 loads the instructions configured to control the driving unit into the memory 130, rather than loading the entirety or at least part of the OS 142 into the memory 130 as described above. Embodiments are not limited thereto, and the limited booting state may be a state in which the entirety or at least part of the OS 142 is not loaded into the memory 130, and when operating in the limited booting state, the processor 120 may load the instructions configured to control the driving unit into the memory 130. When limitedly booted (or in the limited booting state), the processor 120 may supply power only to the driving unit for adjusting the size of the display screen of the flexible display through the power management module 188. Without booting the OS 142, the flexible display may be expanded or reduced at low power.

According to an embodiment, the processor 120 may limitedly boot the electronic device 101 to adjust the size of the display screen of the flexible display, without booting the OS 142 by not loading the boot loader into the memory 130 when the condition for limited booting is satisfied.

According to an embodiment, the processor 120 may load the boot loader into the memory 130 without booting the OS 142 by not executing at least part of the loaded boot loader.

The limited booting of the electronic device 101 is not limited to the embodiments described above, and may be implemented in various embodiments. For example, the state in which the electronic device 101 is limitedly booted (or the limited booting state) may include a state in which at least a portion of the boot loader related to the booting of the OS 142, the kernel, and the OS is not loaded into the memory 130, or a state in which at least a portion of the boot loader, the kernel, and the OS is limitedly used as executed in a limited mode for at least some functions even when loaded into the memory 130.

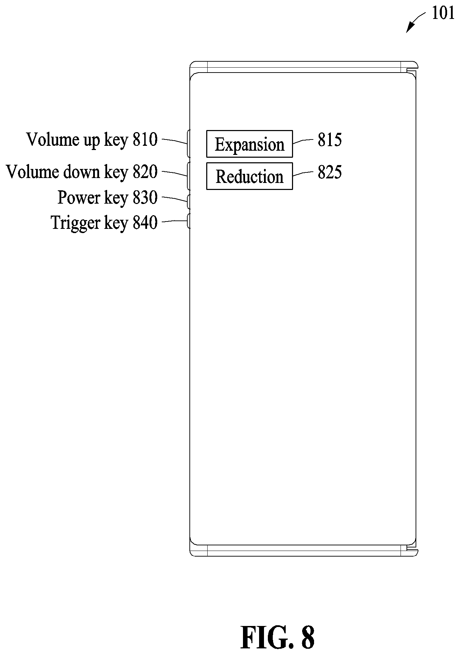

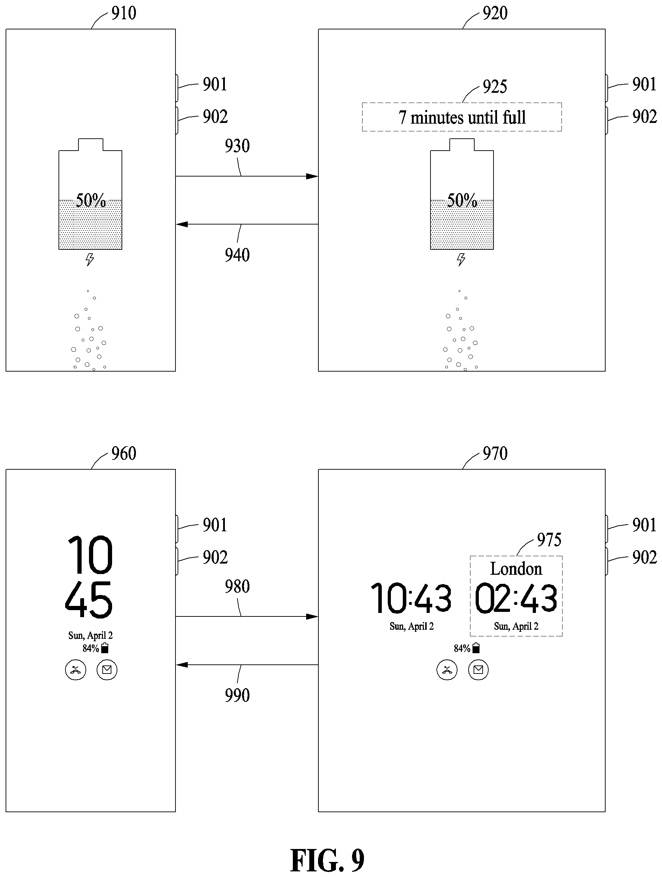

According to an embodiment, the display area may change as the flexible display is adjusted, and the processor 120 may display objects in various manners according to the display area. Various embodiments in which the flexible display is adjusted and objects are displayed in various manners, as the electronic device 101 is limited booted, are described in detail with reference to FIGS. 8 and 9.

FIGS. 6 and 7 are diagrams illustrating a limited booting condition for adjusting a flexible display according to various embodiments.

Referring to FIG. 6, an embodiment of a limited booting condition without a separate physical key is shown. The processor 120 may start operating as power is applied to the electronic device 101 in response to a user input or an external power supply, and the processor 120 may determine whether a limited booting condition is satisfied through information obtained through the input module 150 and the sensor module 176.

In Embodiment 610 and Embodiment 650 of FIG. 6, the input module 150 may detect a user input through a power key to apply power, without a separate physical key, and the sensor module 176 may detect expanded and reduced states of the flexible display, for example, through a Hall sensor. According to an embodiment, when the power key is input in Embodiment 610 and Embodiment 650, the signal of the power key may be high, the signal detected by the Hall sensor when the flexible display is expanded may be high, and normal booting and limited booting (OFF_Motor) may be initiated with a low signal. In Table 630 and Table 670 of FIG. 6, a high signal may be denoted by H, and a low signal may be denoted by L.

According to an embodiment, in Embodiment 610, booting sources of normal booting and limited booting (OFF_Motor) for adjusting the flexible display may be distinguished. For example, the booting sources of normal booting and limited booting may be distinguished in the power management module 188 in operation 620. The booting sources may be a means of turning on the power management module 188 through an external input during the power-on process of the electronic device 101. For example, the booting sources may turn on the power management module 188 through a pin of a PMIC implemented as at least part of the power management module 188, and may be a signal by a power key input of the electronic device 101 or a combination of signals by a power key input and an input/inputs other than a power key input.

Referring to Table 630, when the power key to apply power is input (Power key signal H), and the flexible display is in an expanded state (Hall sensor signal H), limited booting may be initiated (OFF_Motor signal L), in operation 633. On the contrary, when the power key to apply power is input (Power key signal H), but the flexible display is in a reduced state (Hall sensor signal L), normal booting may be initiated (Normal boot signal L), in operation 637.

According to an embodiment, in Embodiment 650, booting sources of normal booting and limited booting (OFF_Motor) for adjusting the flexible display may be implemented as one. For example, within power management module 188, the boot source for normal and limited booting may be the same in operation 660.

Referring to Table 670, when the power key to apply power is input (Power key signal H), and the flexible display is in an expanded state (Hall sensor signal H), limited booting without booting the OS 142 may be initiated, in operation 673. When the power key to apply power is input (Power key signal H), but the flexible display is in a reduced state (Hall sensor signal L), normal booting may be initiated, in operation 637.

Referring to FIG. 7, an embodiment for a limited booting condition when a separate physical key is present is shown. The processor 120 may start operating as power is applied to the electronic device 101 in response to a user input or an external power supply, and the processor 120 may determine whether a limited booting condition is satisfied through information obtained with the input module 150 and the sensor module 176.

In Embodiment 710 and Embodiment 750 of FIG. 7, the input module 150 may detect a user input through a separate physical key or a power key to apply power, and the sensor module 176 may detect expanded and reduced states of the flexible display, for example, through a Hall sensor. According to an embodiment, the condition for detecting the state of the flexible display with a Hall sensor is the same as described with reference to FIG. 6 and thus, is omitted.

According to an embodiment, in Embodiment 710, booting sources may be distinguished according to a power key to apply power and a separate trigger key for limited booting. For example, the separate trigger key for limited booting may be connected to a boot pin of a power management integrated circuit (PMIC) in which the power management module 188 is implemented.

According to an embodiment, in Embodiment 750, booting sources according to a power key to apply power and a separate trigger key for limited booting may be implemented as one. For example, by connecting the trigger key to a separate input pin (a general processing input(output) (GPI(O))) while using the same boot pin as the boot pin to which the power key is connected in the PMIC in which the power management module 188 is implemented for the trigger key, the processor 120 may verify the input of the trigger key after initiating booting and initiate limited booting.

However, the limited booting condition for controlling the flexible display is not limited to Embodiments 610, 650, 710, and 750 described with reference to FIGS. 6 and 7, and various embodiments may be possible. For example, the limited booting condition may be set with the trigger key instead of the power key in Embodiments 610 and 650 of FIG. 6, and the limited booting condition may be set by simultaneously inputting the trigger key and the power key, instead of inputting the trigger key in Embodiments 710 and 750 of FIG. 7.

According to an embodiment, when limited booting is initiated, the processor 120 may load instructions configured to control the driving unit for adjusting the size of the display screen of the flexible display into the memory 130, rather than loading the OS 142 into the memory 130. For example, as described above with reference to FIG. 5, when the limited booting condition is satisfied, the processor 120 may adjust the expanded or reduced state of the flexible display by executing the instructions, without booting the OS 142 by not loading a boot loader into the memory 130.

As the electronic device 101 is limitedly booted, the power management module 188 may supply power only to the driving unit to control the flexible display. For example, the power management module 188 may supply designated power only to the driving unit, such that the size of the display screen of the flexible display may be adjusted, even without booting the OS 142. According to another embodiment, the power management module 188 may further supply the designated power to the display module 160, such that objects may be displayed on the display screen of the flexible display even without booting the OS 142. Various embodiments in which the screen is displayed in the electronic device 101 will be described later in detail with reference to FIG. 9. The designated power provided by the power management module 188 to the driving unit or the display module 160 may be implemented in various manners depending on the operation. The settings for the designated power depending on the operation may be stored in the memory 130 or may be changed according to user settings.

According to an embodiment, a separate processor for controlling the driving unit for adjusting the size of the display screen of the flexible display irrespective of limited booting may be included in the electronic device 101, and the flexible display may be adjusted by the separate processor, independently of the OS booting of the electronic device 101, according to predetermined conditions.

According to an embodiment, the processor 120 may determine that the limited booting condition is satisfied as described with reference to FIGS. 6 and 7, even if the OS 142 fails to be normally booted due to a software issue. For example, when a software issue is detected, for example, the OS 142 is not accessed or the OS 142 is reset repeatedly, the processor 120 may display a debug mode menu with a flexible display motor control menu added on the screen, and adjust the state of the flexible display according to a user input.

FIG. 8 is a diagram illustrating an operation of adjusting a flexible display according to various embodiments.

When the limited booting condition for adjusting the flexible display is satisfied as described with reference to FIGS. 6 and 7, the processor 120 may adjust the size of the display screen of the flexible display at low power through the power management module 188.

According to an embodiment, the expanded state and the reduced state of the flexible display may be preset, and the processor 120 may adjust the size of the display screen of the flexible display to a preset state.

According to another embodiment, the processor 120 may adjust the size of the display screen of the flexible display according to a user input. Since the electronic device 101 is limitedly booted, the processor 120 may adjust the size of the display screen of the flexible display based on a simple physical key input through the input module 150.

Referring to FIG. 8, the electronic device 101 may include a power key 830 to apply power and a separate trigger key 840 for limited booting, described with reference to FIGS. 6 and 7, and may further include other physical keys such as, for example, a volume up key 810 and a volume down key 820. The processor 120 may control the expansion and reduction of the flexible display according to inputs through the physical keys. When the limited booting condition is satisfied, the processor 120 may supply a designated amount of power to the display module 160 through the power management module 188, and simple user interfaces (UIs) 815 and 825 for expansion and reduction may be displayed on the electronic device 101. For example, when the limited booting condition is satisfied, compared to normal booting, a UI having at least one of the color, size, or position limited may be displayed on the electronic device 101.

FIG. 9 is a diagram illustrating an example of displaying different screens according to the adjustment of a flexible display according to various embodiments.

As described with reference to FIG. 8, when the limited booting condition is satisfied, the processor 120 may supply a designated amount of power to the display module 160 through the power management module 188, and display simple objects even without booting the OS 142. Referring to FIG. 9, as the electronic device 101 is limitedly boots, the flexible display may be adjusted, such that objects may be displayed in various manners. The flexible display may be expanded or reduced based on a user input through physical keys 901 and 902, as described with reference to FIG. 8.

According to an embodiment, when the electronic device 101 is being charged, the electronic device 101 may be limitedly booted, and then, the flexible display may change from a reduced state 910 to an expanded state 920 in operation 930, or from the expanded state 920 to the reduced state 910 in operation 940. When the flexible display is expanded in operation 930, additional information 925 may be further displayed.

According to an embodiment, information may be displayed through a function to display information (e.g., an always-on display (AOD) function) even when the electronic device 101 is limitedly booted, and objects to be displayed may vary depending on the expansion and reduction of the flexible display. For example, the electronic device 101 may be limitedly booted, and the flexible display may change from a reduced state 960 to an expanded state 970 in operation 980, or from the expanded state 970 to the reduced state 960 in operation 990. When the flexible display is expanded in operation 980, additional information 975 may be further displayed.

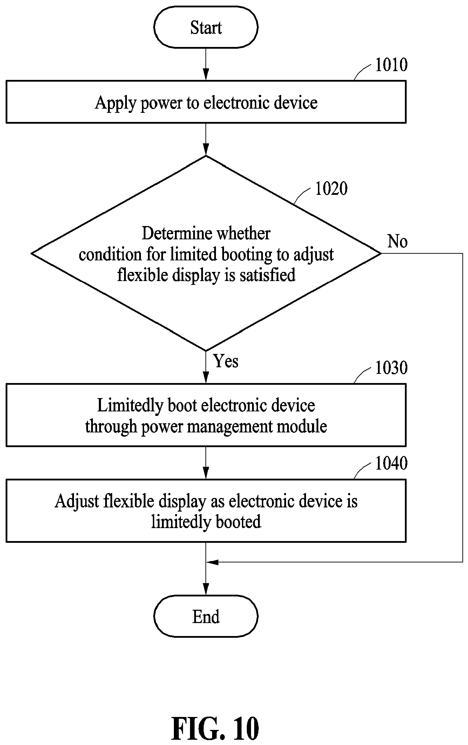

FIG. 10 is a flowchart illustrating an operation method of an electronic device according to various embodiments.

Operations 1010 to 1040 may be performed by the processor 120 of the electronic device 101 described above with reference to FIG. 5. Thus, the description provided with reference to FIGS. 1 to 9 will not be repeated for conciseness.

According to an embodiment, power may be applied to the electronic device 101 in operation 1010. For example, a user may input a power-on key, or external power may be supplied to the electronic device 101. The processor 120 may initiate an operation as power is applied to the electronic device 101.

According to an embodiment, in operation 1020, the processor 120 may determine whether a condition for limited booting to adjust the size of the display screen of the flexible display is satisfied. For example, as described above with reference to FIGS. 5 to 7, the processor 120 may determine whether the condition for limited booting is satisfied based on a user input received through the input module 150 and state information of the flexible display detected through the sensor module 176.

According to an embodiment, in operation 1030, the processor 120 may limitedly boot the electronic device 101 to adjust the flexible display when the condition for limited booting is satisfied (if Yes in operation 1020). The processor 120 may operate in a limited booting state in which the OS 142 is not booted, when the condition for limited booting is satisfied. For example, the processor 120 may limitedly boot the electronic device 101 by loading instructions configured to control the driving unit for adjusting the flexible display, rather than loading the OS 142 into the memory 130. The processor 120 may limitedly supply power only to the driving unit for adjusting the size of the display screen of the flexible display through the power management module 188.

According to an embodiment, in operation 1040, the processor 120 may adjust the size of the display screen of the flexible display as the electronic device 101 is limitedly booted. As described with reference to FIG. 8, the processor 120 may adjust the size of the display screen of the flexible display according to a preset state, or adjust the size of the display screen of the flexible display according to a user input. For example, the processor 120 may supply designated power to the driving unit to control the expanded or reduced state of the flexible display through the power management module 188. As described with reference to FIG. 9, the state of the flexible display may be adjusted as the electronic device 101 is limitedly booted, and the processor 120 may display objects differently depending on the expansion and reduction of the flexible display.

According to an embodiment, an electronic device 101 may include a display module 160 including a flexible display, a driving unit configured to change a size of a display screen where the flexible display is exposed to the outside of the electronic device 101, a power management module 188 configured to supply power to the electronic device 101, a memory 130 configured to store computer-executable instructions, and at least one processor (e.g., the processor 120 of FIG. 1) configured to access the memory 130 and execute the instructions. The at least one processor may determine whether a condition for limited booting to control the driving unit is satisfied, when power is applied to the electronic device 101. The at least one processor may operate in a limited booting state in which an OS 142 is not booted, when the condition for limited booting is satisfied. The at least one processor may adjust the size of the display screen of the flexible display by controlling the driving unit through the power management module 188, in the limited booting state.

According to an embodiment, power may be applied to the electronic device according to a power-on user input through an input module 150, or an external power supply.

According to an embodiment, the condition for limited booting may be determined based on a user input received through an input module 150 and state information corresponding to the size of the display screen detected through a sensor module 176.

According to an embodiment, the sensor module 176 may detect the state information corresponding to the size of the display screen independently of the OS 142.

According to an embodiment, the input module for the user input for limited booting may include at least any one of a physical key to apply power to the electronic device 101 and a separate physical key for limited booting.

According to an embodiment, the limited booting state may include a state in which the OS 142 is not loaded into the memory 130 and instructions configured to control the driving unit are loaded into the memory 130.

According to an embodiment, the at least one processor may adjust the size of the display screen of the flexible display to a set state, in the limited booting state.

According to an embodiment, the at least one processor may adjust the size of the display screen of the flexible display based on a user input, in the limited booting state.

According to an embodiment, the at least one processor may display an object differently by adjusting the size of the display screen of the flexible display.

According to an embodiment, the flexible display may include any one of a rollable display, a slidable display, and a foldable display.

According to an embodiment, in an operation method of an electronic device 101, the electronic device 101 may include a display module 160 including a flexible display, a driving unit configured to change a size of a display screen where the flexible display is exposed to the outside of the electronic device 101, and a power management module 188 configured to supply power to the electronic device 101. The operation method of the electronic device 101 may include, when power is applied to the electronic device 101, determining whether a condition for limited booting to control the driving unit is satisfied, operating in a limited booting state in which an operating system is not booted, when the condition for limited booting is satisfied, and adjusting the size of the display screen of the flexible display by controlling the driving unit through the power management module 188, in the limited booting state.

According to an embodiment, power may be applied to the electronic device 101 according to a power-on user input through an input module 150, or an external power supply.

According to an embodiment, the condition for limited booting may be determined based on a user input received through an input module 150 and state information corresponding to the size of the display screen detected through a sensor module 176.

According to an embodiment, the sensor module 176 may detect the state information corresponding to the size of the display screen independently of the OS 142.

According to an embodiment, the limited booting state may include a state in which the OS 142 is not loaded into the memory 130 and instructions configured to control the driving unit for adjusting the size of the display screen of the flexible display are loaded into the memory 130.

According to an embodiment, the adjusting of the size of the display screen of the flexible display may include adjusting the size of the display screen of the flexible display to a set state.

According to an embodiment, the adjusting of the size of the display screen of the flexible display may include adjusting the size of the display screen of the flexible display based on a user input.

According to an embodiment, the flexible display may include any one of a rollable display, a slidable display, and a foldable display.

## Claims

1. An electronic device comprising:
a display module comprising a flexible display;
a driving unit configured to change a size of a display screen where the flexible display is exposed to the outside of the electronic device;
a power management module configured to supply power to the electronic device;
a memory configured to store computer-executable instructions; and
at least one processor configured to access the memory and execute the instructions,
wherein the at least one processor, when the instructions are executed, is configured to:
determine whether a condition for limited booting to control the driving unit is satisfied, when power is applied to the electronic device,
operate in a limited booting state in which an operating system is not booted, when the condition for limited booting is satisfied, and
adjust the size of the display screen of the flexible display by controlling the driving unit through the power management module, in the limited booting state.

2. The electronic device of claim 1, wherein power is applied to the electronic device according to a power-on user input through an input module, or an external power supply.

3. The electronic device of claim 1, wherein the condition for limited booting is determined based on a user input received through an input module and state information corresponding to the size of the display screen detected through a sensor module.

4. The electronic device of claim 3, wherein the sensor module is capable of detecting the state information corresponding to the size of the display screen independently of the operating system.

5. The electronic device of claim 3, wherein the input module for the user input for limited booting comprises at least any one of a physical key to apply power to the electronic device and a separate physical key for limited booting.

6. The electronic device of claim 1, wherein the limited booting state comprises a state in which the operating system is not loaded into the memory and instructions configured to control the driving unit are loaded into the memory.

7. The electronic device of claim 1, wherein the at least one processor is configured to adjust the size of the display screen to a set state, in the limited booting state.

8. The electronic device of claim 1, wherein the at least one processor is configured to adjust the size of the display screen based on a user input, in the limited booting state.

9. The electronic device of claim 1, wherein the flexible display comprises any one of a rollable display, a slidable display, and a foldable display.

10. An operation method of an electronic device, wherein
the electronic device comprises a display module comprising a flexible display, a driving unit configured to change a size of a display screen where the flexible display is exposed to the outside of the electronic device, and a power management module configured to supply power to the electronic device, and wherein
the operation method comprises:
when power is applied to the electronic device,
determining whether a condition for limited booting to control the driving unit is satisfied; and
operating in a limited booting state in which an operating system is not booted, when the condition for limited booting is satisfied, and adjusting the size of the display screen of the flexible display by controlling the driving unit through the power management module, in the limited booting state.

11. The operation method of claim 10, wherein power is applied to the electronic device according to a power-on user input through an input module, or an external power supply.

12. The operation method of claim 10, wherein the condition for limited booting is determined based on a user input received through an input module and state information corresponding to the size of the display screen detected through a sensor module.

13. The operation method of claim 12, wherein the sensor module is capable of detecting the state information corresponding to the size of the display screen independently of the operating system.

14. The operation method of claim 10, wherein the limited booting state comprises a state in which the operating system is not loaded into the memory and instructions configured to control the driving unit are loaded into the memory.

15. The operation method of claim 10, wherein the adjusting of the size of the display screen of the flexible display comprises adjusting the size of the display screen to a set state or adjusting the size of the display screen based on a user input.
